# EUROPEAN PATENT SPECIFICATION

(11) **EP 2 045 578 B1**
(45) Date of publication and mention of the grant of the patent: **12.05.2010**
(21) Application number: 07253887.9
(22) Date of filing: 01.10.2007
(51) Int. Cl.: G01C 21/34, G08G 1/0968, G08G 1/0967

(54) **Dynamic route guidance apparatus and method**
Vorrichtung und Verfahren zur dynamischen Routenführung
Appareil et procédé de guidage routier dynamique

(43) Date of publication of application: 08.04.2009
(73) Proprietor: DENSO CORPORATION, Kariya-City, Aichi-Pref. (JP)
(72) Inventor: Glaister, Alan c/o Denso Sales uk ltd, Coventry CV2 2TB (GB)
(74) Representative: Harris, Ian Richard

(56) References cited:
- EP-A- 1 645 849
- JP-A- 2006 226 997
- US-A1- 2003 154 024
- US-B1- 6 453 230

## Description

### BACKGROUND

The present invention relates to a navigation apparatus, for example a vehicle navigation apparatus that can provide dynamic route guidance and to a method of providing dynamic route guidance.

Navigation apparatus is known, for example a vehicle navigation apparatus, that can provide routing information based, for example, on satellite positioning information, for example GPS, Galileo, GLONASS or similar systems.

A known navigation apparatus can calculate a route from a start location to a destination using map data stored in the system and can provide guidance to a user by a visual display and/or by audible instructions. Some systems can calculate both a shortest route and a quickest route for the user to choose. If a user deviates from a precalculated route some systems automatically recalculate the route to the destination taking account of the deviation.

Some systems can also receive and process dynamic traffic information. The dynamic traffic information can be supplied of example, on a radio channel, for example as a sideband to an FM radio signal, or encoded in a digital radio signal, from a satellite information signal, a mobile telephony signal, a wireless digital (WiFi) signal, or the like.

A conventional navigation system capable of receiving and processing traffic information can be responsive to an incident along a route set in the navigation system to provide dynamic route guidance to avoid the incident. Examples of incidents can be road closures, road works, slow traffic and traffic jams. In response to such an incident, the dynamic route guidance system can be operable to change a routing to avoid the incident using, for example, alternative roads that pass around the incident.

It is well known to a driver that has to drive in busy areas that there can be daily occurrences of traffic incidents in particular locations. For example, at certain pinch points, there can often be slow traffic as a result of the traffic volume at busy commuting times. In many cases, an alternative routing can avoid the journey being delayed by the incident. However, there are also examples where a driver may know that a suggested alternative routing is not better or quicker than a route that passes the incident. For example, a driver may be aware from local road knowledge that in some cases there is no better or quicker way around an incident. That an alternative route suggested may not be advantageous can be, at least in part, as a result of traffic information not being available for the alternative route, for example. The driver may also be aware from experience that the alternative route(s) may be affected badly as a knock-on effect.

In order to make use of the dynamic route guidance for other parts of their routes where there are better alternatives, a driver must therefore put up with a conventional dynamic route guidance system asking on a daily basis if he or she wants to route around such a traffic incident. With conventional commercial available systems, the only other option is to turn off dynamic route guidance, which could then result in becoming stuck in a traffic incident that the driver could have avoided had the dynamic route guidance system been active.

Document US 6453230 discloses a navigation system equipped to receive traffic messages and adapted to provide dynamic route guidance in response to messages received. This system is furthermore arranged to include a selection of regions of interest and to only process messages in the selected regions.

Japanese patent application JP2006/226997 (Takeuchi et al) describes a navigation system that allows an evasion area to be specified and an evasion time zone to be set, and then enables a route to be determined that avoids the evasion area during the evasion time zone. However, the patent application does not address the problems described above with respect to dynamic route guidance.

Accordingly, the present invention seeks to enable a user to configure a navigation system selectively to ignore traffic guidance where incidents are known to be unavoidable, while still providing dynamic route guidance otherwise.

### SUMMARY

An aspect of the invention provides a navigation apparatus, for example a vehicle navigation apparatus, comprising storage for geographical mapping data that defines geographical locations. Information can be input to specify a journey from a geographical start point to a geographical end point and at least one exclusion zone within which dynamic route guidance for the journey is not required. The navigation apparatus can receive traffic incident report data defining a type of incident and a location of the incident. The apparatus can perform dynamic route processing responsive to the traffic incident report data and exclusion zone data and can selectively suspend dynamic route guidance dependent upon type of traffic incident within the specified exclusion zone. The result of the dynamic route processing can be output to the user.

Another aspect of the invention provides a method of operating such a navigation apparatus. A further aspect of the invention provides a computer program product comprising program instructions for causing a programmable navigation apparatus to carry out such a method.

An embodiment of the present invention can enable efficient and effective dynamic route guidance whereby traffic guidance can be suspended where it is known that the best option is not to re-route around an incident, while allowing full dynamic route guidance otherwise.

In an embodiment of the invention, suspension of the dynamic route guidance can be maintained in respect of at least one specific type of traffic incident within the at least one specified exclusion zone, for example in respect of a road closure.

### BRIEF DESCRIPTION OF THE DRAWINGS

Embodiments of the invention will now be described by way of example only with reference to the accompanying drawings.
Figure 1 is a schematic representation of a vehicle;
Figure 2 is a schematic representation of a dashboard of a vehicle;
Figure 3 is a schematic block diagram of an example embodiment of a navigation apparatus in accordance with the invention;
Figure 4 is a schematic representation of information stored in the navigation apparatus;
Figure 5 is a flow diagram illustrating an example process for setting up a dynamic route guidance exclusion zone;
Figure 6 is a schematic representation of an example of a first dynamic route guidance exclusion zone;
Figure 7 is a schematic representation of an example of a second dynamic route guidance exclusion zone;
Figure 8 is a flow diagram illustrating an example dynamic route guidance process that takes account of a dynamic route guidance exclusion zone;
Figure 9 is a flow diagram illustrating an example process for monitoring when a dynamic route guidance exclusion zone is activated or deactivated; and
Figure 10 is a schematic block diagram of a system incorporating an example embodiment of a navigation apparatus in accordance with the invention.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the scope of the present invention as defined by the appended claims.

### DETAILED DESCRIPTION

Example embodiments of the invention are described with reference to the accompanying drawings. In an example embodiment, information can be input to a navigation method and apparatus to specify a journey from a geographical start point to a geographical end point and at least one exclusion zone within which dynamic route guidance for the journey is not required. The navigation apparatus can receive traffic incident report data defining a type of incident and a location of the incident. The apparatus can perform dynamic route processing responsive to the traffic incident report data and exclusion zone data and can selectively suspend dynamic route guidance dependent upon type of traffic incident within the specified exclusion zone.

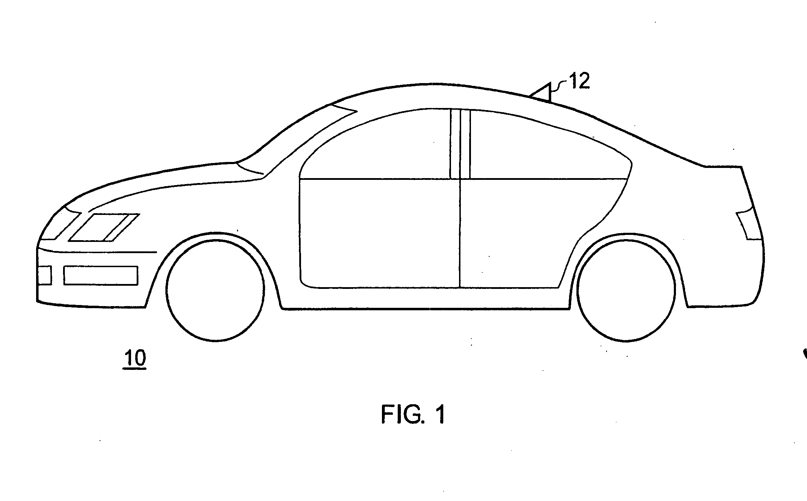

Figure 1 a schematic representation of a vehicle 10 provided with a satellite antenna 12 for receiving satellite signals for use in a navigation system.

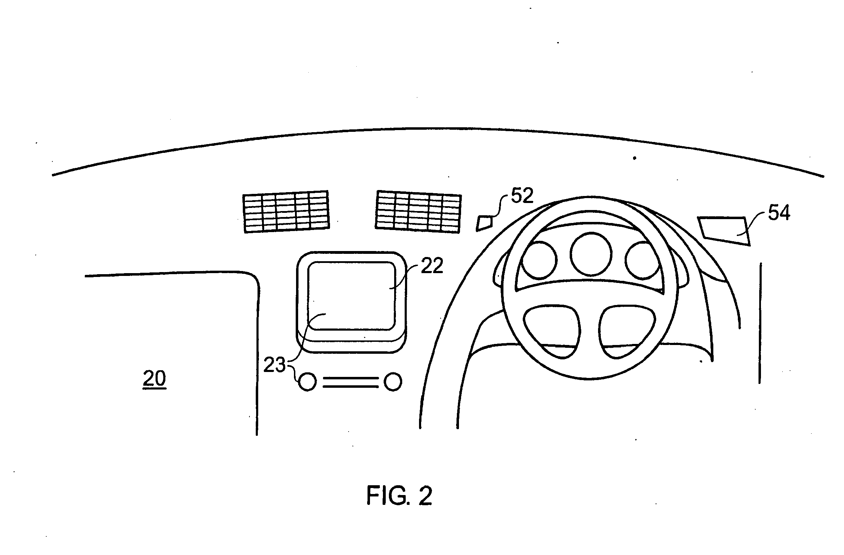

Figure 2 is a schematic representation of a dashboard 20 of a vehicle such as the vehicle 1. Among other components illustrated on the dashboard are a display screen 22 of a navigation system, one or user operable controls 23 such as a touch screen facility for the display 22 and/or one or more control knobs, buttons, etc., a microphone 52 and a loudspeaker 54. These components will be referred to in the following description.

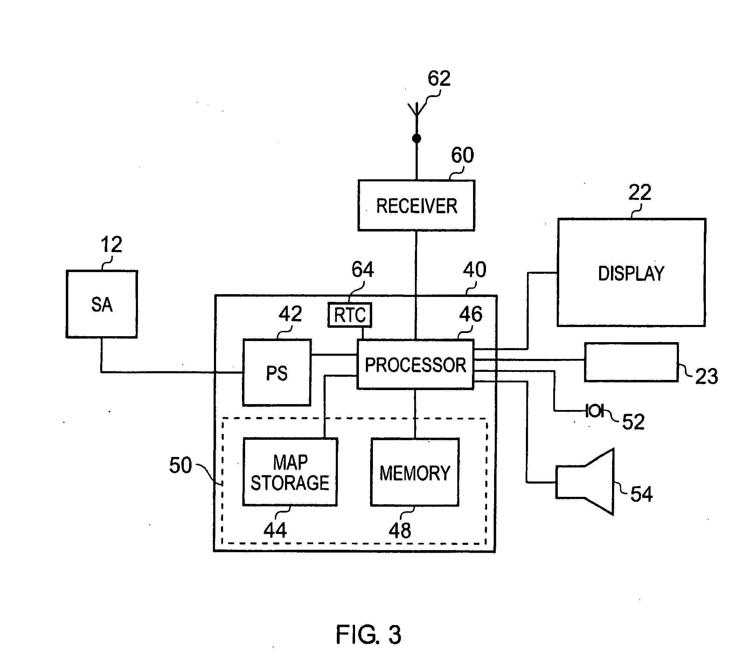

Figure 3 is a schematic representation of an example of a vehicle navigation apparatus that is connected to the antenna 12 for receiving signals from a constellation of satellites of a global positioning system such as, for example a global navigation satellite system (e.g., the Global Positioning System (GPS) or the Galileo system). A positioning system 42 in the navigation apparatus processes the received signals and provides position signals representing the position of the navigation apparatus to a processor 46. Some, or all, of the processing of the signals may be done in the processor 46 instead of in the positioning system 42. The processor 46 may be a programmable microprocessor, microcontroller, other programmable processing unit or may be special purpose hardware or a combination of special purpose hardware and a programmable processing device or any other suitable processing apparatus. A real time clock (RTC) 64 can be provided to provide time of day information for the processor 46.

Map storage 44 stores a database containing mapping data from which a route may be calculated. In an example embodiment of the invention, the mapping data includes geographical mapping data that defines geographical locations, for example using geographical point data. Typically the storage is a formed of a non-volatile memory medium, for example a non-volatile random access memory such as a flash memory, hard disk drive storage, etc. However, it could also be formed from a volatile memory, for example with a battery back up.

Data and program memory 48 is provided for storing programs and other information for use by the processor 46. The memory 48 may be any type of suitable memory and/or storage and can include volatile and non-volatile memory as appropriate. Also, although the map storage and the memory are shown as separate entities, they could be held in or distributed between one or more memory and/or storage units. Accordingly, in the following description, reference will be made generally to information storage 50, it being understood that this can comprises memory and storage of the navigation system and/or additional media used to hold information for use with the navigation system.

An output device such as, for example, the display screen 22 illustrated in Figure 2, which can, for example be an LCD display screen, can present visual information to the user. Alternatively, or in addition, an output device can be in the form of a loudspeaker such as the loudspeaker 54 illustrated in Figure 2 that can be used to present audible (e.g. voiced) information to the user from a voice command generator. The voice command generator can be implemented, for example, in software running on the processor 46 or could be implemented by special purpose hardware (not shown).

An input device 23 can be formed by one or more manually operable devices such as a control knob, switch, etc. that can allow the user to manually input data into the system and to select options presented to the user. Alternatively, or in addition, an input device can be implemented using a touch sensitive screen (e.g., incorporated in the screen 22) on which buttons can be displayed and operated. Alternatively, or in addition, the input device can include a microphone 52 which may be used in conjunction with a speech recognition system to input data and selections into the system. The voice recognition system can be implemented, for example, in software running on the processor 46 or could be implemented by special purpose hardware (not shown).

The processor 46 may also receive other data from components and/or sensors of the vehicle for example for detecting speed of travel and/or distance travelled for the purpose of improving the accuracy of the estimate of position especially in circumstances when it is not possible to receive sufficient signals from the satellites.

For example, as illustrated in Figure 3, the processor can receive traffic incident report data defining a type of incident and a location of the incident from traffic incident report receiver 60. In an example embodiment the receiver is a radio signal receiver and/or decoder that is able to extract the traffic incident report data from radio signal received from an aerial 62. The traffic incident report data can be broadcast, for example as a sideband to a radio signal (e.g., an FM radio signal) or integrated in the radio signal, for example encoded in a digital radio signal. Alternatively, or in addition, dynamic traffic information can be supplied for example, from a satellite information signal, a mobile telephony signal, a wireless digital (WiFi) signal, for example from roadside transmitters, or in any other appropriate manner using an appropriate traffic incident report receiver. In an example embodiment of the invention the receiver is operable to receive real time traffic incident report data.

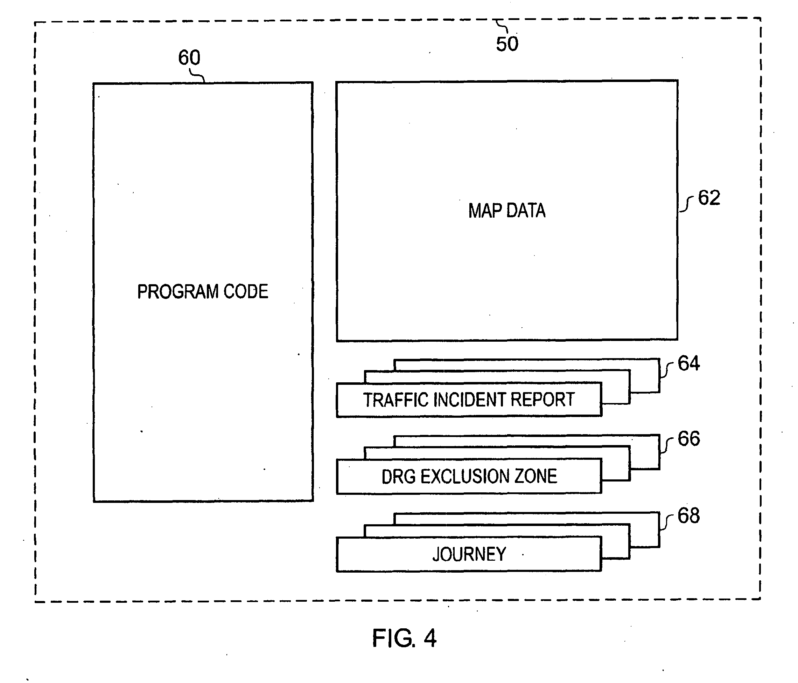

Figure 4 is a schematic representation of content of the information storage 50. As shown in Figure 4, this can include, but is not limited to program code 60, map data 62, traffic incident report data 64 for one or more traffic incident reports dynamic route guidance exclusion zone data 66 for one or more dynamic route guidance exclusion zones, and journey data 68 defining a journey programmed into the navigation system.

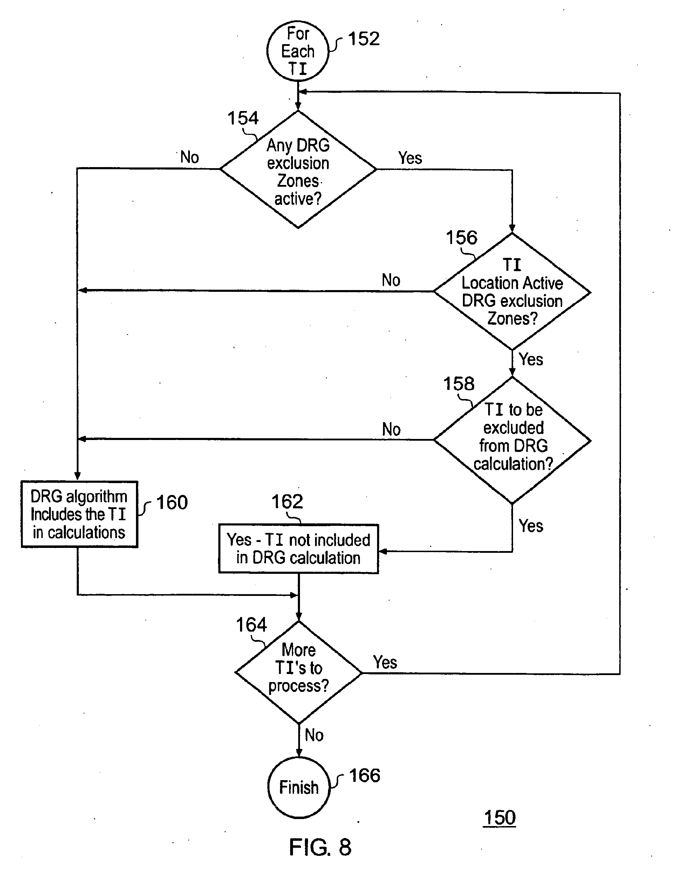

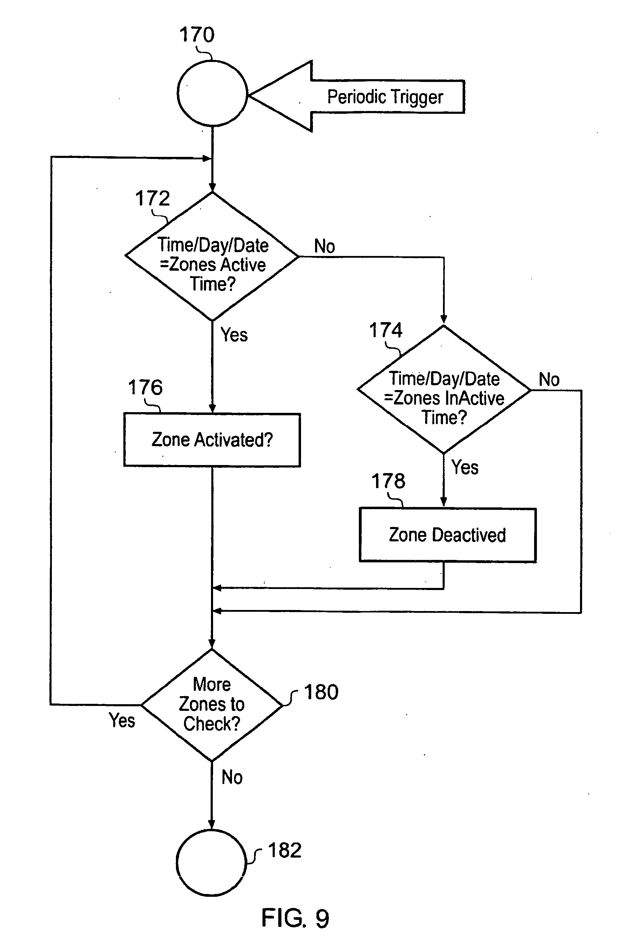

The programs and data stored in the information storage 50 can be operable to cause the processor 46 to operate in accordance with, for example, the flow charts of Figures 8 and 9 described hereinafter.

In an example embodiment of the invention, the user input devices (e.g., 23 and/or 52) can be used by a user to define one or more exclusions zones and information defining the exclusions zone(s) can be stored in the information storage 50. In an example embodiment, the processor 46 can be configured to provide dynamic route guidance processing in responsive to traffic incident report data received from the receiver and to the current position of the navigation apparatus as determined by the position system 42. The processor 46 can further be configured to respond to data 66 defining an exclusion zone selectively to suspend dynamic route guidance within the exclusion zone. The result of the dynamic route guidance can be output to the user.

In an embodiment the processor 46 can be configured selectively to suspend dynamic route guidance in the exclusion zone according to the type of traffic incident. For example, the processor 46 can be configured selectively to suspend dynamic route guidance in the exclusion zone in response to at least one type of traffic incident and not to suspend dynamic route guidance within the exclusion zone in response to at least one other type of traffic incident. In one specific example, for instance, the processor 46 can be configured not to suspend dynamic route guidance in the exclusion zone where the traffic incident involves a road closure but otherwise to suspend dynamic route guidance in the exclusion zone for all other types of traffic incident. In another specific example, for instance, the processor 46 can be configured not to suspend dynamic route guidance in the exclusion zone where the traffic incident involves a road closure and/or a delay of greater than a predetermined time, but otherwise to suspend dynamic route guidance in the exclusion zone for all other types of traffic incident. It will be appreciated that in other specific examples can be envisaged.

In an example embodiment, the processor 46 could be configured to allow a user to specify one or more types of traffic incident for which dynamic route guidance either is to be suspended, or is not to be suspended, within the exclusion zone.

The stored exclusion zone data 66 defining an exclusion zone can include data defining one or more time periods when the exclusion zone is to be active and/or non active. Where such time period data is provided, the processor can be operable to access the stored data defining the time period(s) to selectively suspend dynamic route guidance according to the type of traffic incident within the specified exclusion zone when the exclusion zone is active.

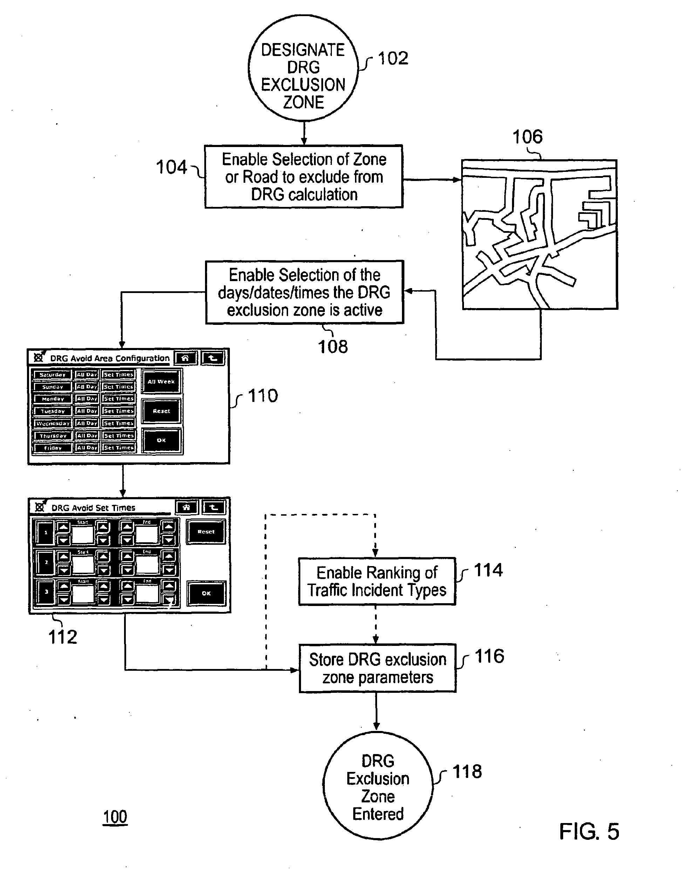

Figure 5 is a flow diagram illustrating an example process 100 for specifying the parameters of an exclusion zone. In an example embodiment, the processor 46 is configured to allow a user to specify one or more time periods when an exclusion zone is to be active and/or non active, the process starting at step 102.

In step 104, the exclusion zone(s) can be defined in terms of longitude and latitude references that are determined by the processor 46 and are stored in the information storage 50 as the dynamic route guidance exclusion zone data 66 in response to user input for specifying an exclusion zone. The definition of an exclusion zone can be input by a user by use of one or more of, for example, graphical, voice and text based inputs using one or more of, for example, touch screen, remote control, hardware (buttons, dials, etc) and voice recognition interfaces.

A dynamic route guidance exclusion zone can be selected by a user by specifying a map area or selecting a particular road or section of a road, for example. The dynamic route guidance exclusion zone can be selected by a user, for example, by one or more of selecting an area or a road from a map, searching for an area, search for a road, and basing the exclusion zone on a traffic incident. The actual operations performed by the user can involve, for example, touching and/or dragging operations using a touch screen display of the navigation system when the area and/or road is displayed on the display, for example using a graphical user interface 106. Alternatively, appropriate voice or text-based interfaces can be used.

The user interface, of whatever form, can be configured to offer the user the ability to select roads or areas to set as a dynamic route guidance exclusion zone.

For example, when selecting an exclusion zone as an area from a map, the user can scroll to the area on which to select the exclusion zone and when the user is happy with the zone to be selected, to set that exclusion zone. The user can further select the size of the zone and/or to increase or decrease the area and extent of the exclusion zone.

As a further example, when selecting a road, the user could do this by searching for the road in map database and/or to select an option to set a dynamic route guidance avoidance road and then to select the road from a map.

The processor 46 can then be configured to cross reference the latitude and longitude values for the exclusions zone(s) to received traffic information locations to build up a list of location references that should be ignored if an incident is reported in the traffic incident data received from the receiver 60, which incident is located within an exclusion zone. The processor 46 can also be configured to use the time indicated by the real time clock to determine when the navigation/routing system should enable or disable the exclusion are for use in dynamic route guidance calculations.

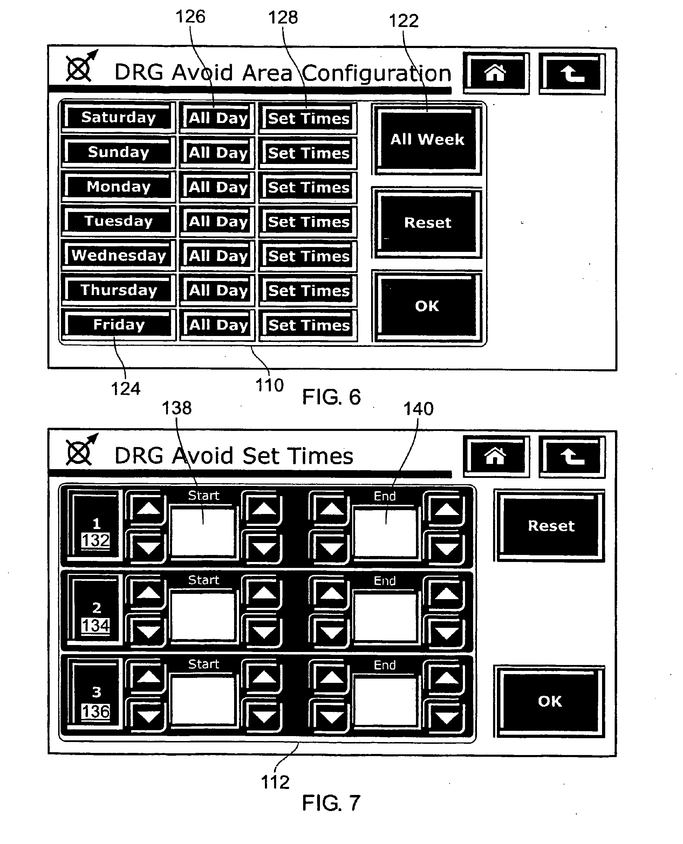

When the dynamic route guidance zone (whether this be an area or a road) has been set, the user can then configure the periods (e.g., days or dates and/or times) that the dynamic route guidance exclusion zone is to be active (and/or is to be inactive). In other words, in step 108, the exclusion zones can be sub-configurable to allow the enabling or disabling of the exclusion zones at certain times or on certain days or dates to suit user preferences. The time priors can be stored as part of the dynamic route guidance exclusion zone data 66 in the information storage 50. Examples of graphical user interface screens 110 and 112, for specifying the time periods are shown in Figures 6 and 7.

Figure 6 illustrates an example of a first graphical user interface screen 110 that allows a user to activate dynamic route guidance exclusion zones for a complete week using a button 122 or specific days of the week using buttons 124. For each day of the week (or for all week) buttons 126 are provided to allow the user to select the exclusion zone to be active for the complete day, and buttons 128 are provided to allow the user to set specific times.

In response to selection of a button 128 for setting specific times, a further graphical user interface screen 112 can be displayed as shown in Figure 7. The graphical user interface screen 112 shown in Figure 7 allows a user to specify up to three time periods 132, 134 and 136 within a day, in terms of a respective start time 138 and finish time 140, during which the exclusion zone is to be active.

It will be appreciated that in another example, a graphical user interface screen could be provided that allows a user to specify periods within a day during which the exclusion zone is to be inactive. It will be appreciated that in other examples the graphical user interface screen could enable a different number of periods to be specified and/or active and inactive periods to be specified.

In one example embodiment the determination of the time period parameters can be applied globally to all exclusion zones. However, in other example embodiment, different time periods could be set for groups of exclusion zones or individually for one, some or all exclusion zones.

As described above suspension of dynamic route guidance in an exclusion zone can be dependent upon the type of traffic incident. For example dynamic route guidance may be suspended unless the traffic incident is representative of unexpected and/or serious disruption and/or delays, for example a road closure.

Optionally step 114 can be provided, with an appropriate graphical user interface screen displaying types of traffic incident and radio buttons for each type of traffic incident. The user is then able to select an appropriate radio button for each traffic type to select whether to or not to suspend dynamic route guidance in an exclusion zone in response to a traffic incident of that type within the exclusion zone when the exclusion zone is active.

In one example embodiment the determination of the traffic incident types can be applied globally to all exclusion zones. However, in other example embodiment, different selections of the traffic incident types could be set for groups of exclusion zones or individually for one, some or all exclusion zones.

In step 118 the parameters defining an exclusion zone are stored in the information storage in the navigation system, for example in the information storage 50.

Figure 8 is a flow diagram illustrating an example dynamic route guidance process that takes account of a dynamic route guidance exclusion zone

The process shown in Figure 8 starts at step 152 for each traffic incident, or traffic incident.

At step 154, the processor 46 determines whether any dynamic route guidance exclusion zones are active, by comparing the time of day clock to the active periods set for any dynamic route guidance exclusion zones using the information stored in the information storage.

If the processor determines at step 154 that no dynamic route guidance exclusion zone is active, then at step 160, the processor 46 takes this traffic incident into account for calculating dynamic route guidance.

If a dynamic route guidance exclusion zone is active, then at step 156 the processor 46 determines whether the location of the traffic incident is within the dynamic route guidance exclusion zone by comparing the location of the traffic incident identified in the traffic incident report data 64 for the traffic incident report concerned to the extent of the recorded dynamic route guidance exclusion zone.

If the processor determines at step 156 that the traffic incident is not within the dynamic route guidance exclusion zone defined by the dynamic route guidance exclusion data 66, then at step 160, the processor 46 takes this traffic incident into account for calculating dynamic route guidance.

Optionally, in the present example, if the processor determines at step 156 that the traffic incident is within the dynamic route guidance exclusion zone defined by the dynamic route guidance exclusion data 66, then at step 158, the processor 46 can be configured to determine whether this traffic incident is of a type that should be excluded in this case from the dynamic route guidance calculation. As indicated above, it can be determined that a traffic incident of one or more particular types would in such a case be included in the calculation (e.g. a road closure) but other types of traffic incident would be excluded. This can either be predetermined by the system or can be set by the user as described with reference to Figure 5.

If the processor determines at step 158 that the traffic incident is not to be excluded from the dynamic route guidance calculation, then at step 160, the processor 46 takes this traffic incident into account for calculating dynamic route guidance.

If the processor determines at step 158, if present, that the traffic incident is to be excluded from the dynamic route guidance calculation, or if the processor determines at step 156 where no step 158 is present that the traffic incident is within the dynamic route guidance exclusion zone, then the traffic incident is not included in the dynamic route guidance calculation as represented at step 162.

Following step 160 or step 162, the processor determines at step 164 whether any further traffic incidents are to be processed, and if so, control passes back to step 154. Otherwise the process finishes at step 166.

Here it should be noted that as an alternative to step 158, where it is predetermined that traffic incidents of a particular type or types (e.g., a road closure) are always to be taken into account in the dynamic route guidance calculation, then a step could be provided that precedes step 154. In this case, step 154 would only be applied to traffic incidents other than the traffic incidents of a particular type or types, and step 160 would be applied for all traffic incidents of the predetermined type or types, that is the traffic incident of the particular type or types would always be taken into account in the dynamic route guidance calculation.

Also, as an alternative to the process step described in step 154, whereby a check is made by the processor against the active an non-active times held for a dynamic route guidance exclusion zone, the dynamic route guidance exclusion zones could alternatively be provided with a flag that indicates whether the zone is currently active or not. Figure 9 is a flow diagram illustrating an example process for monitoring when a dynamic route guidance exclusion zone is activated or deactivated for setting such a flag for a dynamic route guidance exclusion zone.

The process starts at step 170 in response to a periodic trigger, for example as generated by the real time clock 64.

At step 172, the processor 64 compares the time of day from the real time clock 64 to the stored data defining one or more active times for a dynamic route guidance exclusion zone.

If the processor 46 determines at step 172 that the time of day from the real time clock 64 is within an active time for a dynamic route guidance exclusion zone and if the dynamic route guidance exclusion zone is not currently flagged as active, then in step 176 the processor sets the active flag for the dynamic route guidance exclusion zone to indicate that the zone is active, otherwise the dynamic route guidance exclusion zone will be left as active.

If the processor determines at step 172 that the time of day from the real time clock is not within an active time for a dynamic route guidance exclusion zone, then at step 174 the processor 64 checks the time of day from the real time clock to the stored data defining one or more inactive times for a dynamic route guidance exclusion zone.

If the processor determines at step 174 that the time of day from the real time clock is within an inactive time for a dynamic route guidance exclusion zone and if the dynamic route guidance exclusion zone is currently flagged as active, then in step 178 the processor resets the active flag for the dynamic route guidance exclusion zone to indicate that the zone is inactive, otherwise the dynamic route guidance exclusion zone will be left as inactive.

If the processor determines at step 174 that the time of day from the real time clock is not within an inactive time for a dynamic route guidance exclusion zone, or following steps 176 or 178 the processor 46 checks whether any more zones are to be checked. If so, control passes back to step 172, otherwise the process finishes at step 182.

In the above description reference is made to the processor 46 being configured to perform various functions. This can be achieved in part or entirely by means of a special purpose processor, for example implemented as an application specific integrated circuit.

There has been described a navigation apparatus and method into which information can be input to specify a journey from a geographical start point to a geographical end point and at least one exclusion zone within which dynamic route guidance for the journey is not required. Traffic incident report data can be received defining a type of incident and a location of the incident. Dynamic route processing responsive to the traffic incident report data and exclusion zone data and can selectively suspend dynamic route guidance dependent upon type of traffic incident within the specified exclusion zone.

In the embodiments described above, the navigation apparatus is a vehicle navigation apparatus.

However, in another embodiment the navigation apparatus may be a mobile device that is separate from a vehicle, such as, for example, a hand held navigation device, a Personal Data Assistant (PDA), a mobile telephone, or the like that includes, or can receive signals from, a positioning system or device (e.g., a GPS receiver). In such an embodiment, the mobile device could comprise functional components corresponding to those illustrated schematically in Figure 3, suitable configured for a mobile device. For example, the display 22 can be display screen of the mobile device, an output device 54 can be a loudspeaker of the mobile device, an input device 23, 52 can be one or more manually operable devices such as a switch or a touch sensitive screen of the mobile device and/or a microphone of the mobile device 52. The processor 46 can be programmed to provide voiced information and/or to provide voice recognition based on spoken command using the loudspeaker and the microphone, respectively. The processor 46 can also be operable to receive traffic incident report data defining a type of incident and a location of the incident from traffic incident report receiver 60, which can receive traffic incident report data provided via one or more of radio (e.g., using an antenna 62), or from a satellite information signal, a mobile telephony signal, a wireless digital (WiFi) signal, etc. according to a particular embodiment.

In such an embodiment, the dynamic route processing could be performed by a processor in the hand held device. Alternatively, the traffic incident report processing could be performed remotely at a computer server that is in communication with the mobile device using an appropriate communication channel, for example a radio or mobile telephony communications channel (e.g. a mobile telephone data channel).

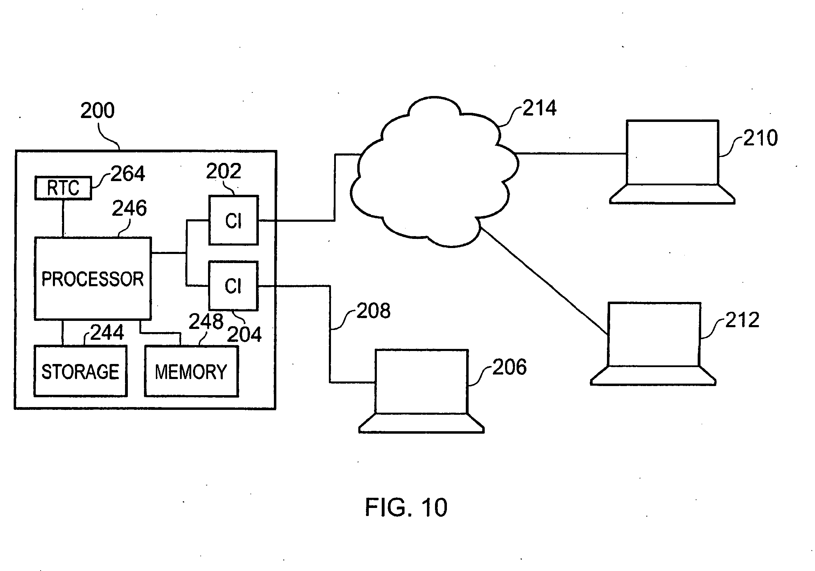

In a further embodiment, the invention could be implemented by one or more servers that that provide dynamic route guidance in response to user queries. Figure 10 is a schematic block diagram representing such an embodiment.

As illustrated in Figure 10, a computer server 200 comprises data storage 244 for storing geographical mapping data that defines geographical locations, a processor 246 and memory 248, a real time clock 264 and at least one communications interface 202, 204 for communicating with a command terminal and/or the Internet. The processor 246 can be programmed with one or more computer programs held in the storage 244 and/or memory 248 to provide dynamic route guidance in response to received queries.

As illustrated in Figure 10, a terminal 206 is configured to communicate with the server 200 via a local area or wide area network 208 and two remote client stations 210 and 212 are configured to communicate with the server 200 via the Internet 214. The terminal 206 can be used to enable an operator to control and configure the operation of the server 200. It will be appreciated that many more than two client devices can communication with the server 200.

A first remote client station 210 can, for example, be a traffic incident monitoring station that is operable to transmit traffic incident report data to the server 200. The server 200 can be programmed to correlate the received data with the map data held in the map storage 244. One or more traffic incident reporting stations can be provided. Although the traffic incident reporting station is shown in Figure 10 as a remote client station communicating via the Internet, it could be configured to communicate via a local or wide area network, or could indeed be implemented as part of the server 200.

A second client station 208 can be a user station at which a user can specify at least one exclusion zone within which dynamic route guidance for a journey for that user is not required and can also specify a journey to be made from a geographical start point to a geographical end point at a given predetermined timing. The user at the client station 208 can access an input web page provided by the server 200, and can use this to make a routing request, or routing query, including specifying at least one exclusion zone within which dynamic route guidance for a journey for that user is not required and for specify a journey to be made from a geographical start point to a geographical end point at a given predetermined timing. In such an example therefore, the communications interface 202 provides a means for receiving a specification of a journey and at least one exclusion zone and a means for receiving traffic incident report data defining a type of incident and a location of the incident. Many such user client stations can communicate with the server 200, for example via the Internet as illustrated in Figure 10, and/or for example via a local area network, a wide area network, a WiFi network, a mobile network, etc.

The processor 246 can be programmed to process the routing request including dynamic route processing responsive to received traffic incident report data and the at least one specified exclusion zone selectively to suspend dynamic route guidance according to a type traffic incident within the at least one specified exclusion zone. The result of the processing can then be output to the client station 208 for display, for example within a web page, on the display of the client station 208. The communications interface 200 provides an output means for outputting to the user the result of the dynamic route processing, which can then be displayed on a display screen of the client system 208.

The invention may also be embodied in a computer program product for controlling a programmable processor such as the processor 46 or 246. The computer program product may be in the form of a computer program on a carrier medium. The carrier medium could be a storage medium such as a solid state, magnetic, optical, magneto-optical or other storage medium. The carrier medium could be a transmission medium such as broadcast, telephonic, computer network, wired, wireless, electrical, electromagnetic optical or any other transmission medium.

Although the embodiments described above have been described in detail, numerous variations and modifications will become apparent to those skilled in the art once the above disclosure is fully appreciated.

## Claims

1. A navigation apparatus comprising:
map data storage means for storing geographical mapping data that defines geographical locations;
means for receiving a specification of a journey from a geographical start point to a geographical end point and at least one exclusion zone within which dynamic route guidance for the journey is not required;
receiving means for receiving traffic incident report data defining a type of incident and a location of the incident;
dynamic route processing means for dynamic route processing, the dynamic route processing means being responsive to received traffic incident report data and the at least one specified exclusion zone selectively to suspend dynamic route guidance according to a type of traffic incident within the at least one specified exclusion zone; and
output means for outputting the result of the dynamic route processing.

2. The navigation apparatus of claim 1, comprising information storage means for storing information defining the journey, the received traffic incident report data and the at least one exclusion zone.

3. The navigation apparatus of claim 1 or claim 2, wherein the information storage means is operable to store information defining the at least one exclusion zone that includes data defining of a time period when said exclusion zone is to be active.

4. The navigation apparatus of claim 3, wherein the dynamic route processing means is responsive to the data defining the time period to suspend dynamic route guidance in respect of at least a predetermined type of traffic incident within the at least one specified exclusion zone when the exclusion zone is active.

5. The navigation apparatus of any preceding claim, wherein the dynamic route processing means is operable to maintain dynamic route guidance in respect of a said traffic incident within the at least one specified exclusion zone where said traffic incident is a road closure.

6. The navigation apparatus of any preceding claim, wherein the receiving means is operable to receive real time traffic incident report data defining a type of incident and a location of the incident.

7. The navigation apparatus of any preceding claim, wherein the output means comprises at least one of a display device and a voiced instruction output apparatus.

8. The navigation apparatus of any preceding claim, wherein the input means comprises one of a touch sensitive display device, a manual selector or a voice capture and recognition apparatus.

9. The navigation apparatus of any preceding claim, comprising position determining means, the dynamic route guidance means being responsive to a position of the navigation apparatus determined by the position determining means.

10. The navigation apparatus of claim 9, wherein the position determining means is operable to determine a position based on satellite signal information.

11. The navigation apparatus of any preceding claim, wherein the navigation apparatus is a vehicle navigation apparatus.

12. A vehicle comprising the navigation apparatus of any preceding claim.

13. The navigation apparatus of any of claims 1 to 10, wherein the navigation apparatus comprises a mobile device.

14. The navigation apparatus of any of claims 1 to 6, wherein the navigation apparatus comprises a computer server.

15. A method for navigating using a navigation apparatus, the method comprising the navigation apparatus:
storing geographical mapping data that defines geographical locations;
receiving input specifying a journey from a geographical start point to a geographical end point and at least one exclusion zone within which dynamic route guidance for the journey is not required;
receiving traffic incident report data defining a type of incident and a location of the incident;
dynamically processing a route in response to the traffic incident report data and the at least one specified exclusion and selectively suspending dynamic route guidance dependent upon a type of traffic incident within the at least one specified exclusion zone; and
outputting the result of the dynamic route processing.

16. The method of claim 15, comprising the navigation apparatus storing information defining the journey, the received traffic incident report data and the at least one exclusion zone.

17. The method of claim 15 or claim 16, comprising the navigation apparatus storing information defining the at least one exclusion zone that includes data defining of a time period when said exclusion zone is to be active.

18. The method of claim 17, comprising the navigation apparatus responding to the data defining the time period to suspend dynamic route guidance in respect of at least a predetermined type of traffic incident within the at least one specified exclusion zone when the exclusion zone is active.

19. The method of any of claims 15 to 18, comprising the navigation apparatus maintaining dynamic route guidance in respect of a said traffic incident within the at least one specified exclusion zone where said traffic incident is a road closure.

20. The method of any of claims 15 to 19, comprising the navigation apparatus receiving real time traffic incident report data defining a type of incident and a location of the incident.

21. The method of any of claims 15 to 20, comprising the navigation device determining a position of the navigation apparatus.

22. The method of any of claims 21, comprising the navigation device determining a position of the navigation apparatus based on satellite signal information.

23. The method of any of claims 15 to 22 for navigating a vehicle.

24. A computer program product comprising program instructions for causing a programmable navigation apparatus to carry out the method of any of claims 15 to 23.

25. The computer program product of claim 24, comprising a machine readable medium, the machine readable medium carrying the program instructions.

## Patentansprüche

1. Navigationsgerät mit:
einem Kartendatenspeichermittel zum Speichern geografischer Kartendaten,
einem Mittel zum Empfangen einer Reisespezifikation von einem geografischen Startpunkt zu einem geografischen Endpunkt und mindestens einer Ausschlusszone innerhalb der eine dynamische Routenführung für die Reise nicht erforderlich ist,
einem Empfangsmittel zum Empfangen von Verkehrsstörungsberichtsdaten, die einen Typ von Störung und einen Ort der Störung definieren,
einem dynamischen Routenverarbeitungsmittel zur dynamischen Routenverarbeitung,
wobei das dynamische Routenverarbeitungsmittel auf die empfangenen Verkehrsstörungsberichtsdaten und die mindestens eine spezifizierte Ausschlusszone selektiv reagiert, so dass eine dynamische Routenführung gemäß einem Typ von Verkehrsstörung innerhalb der mindestens einen spezifizierten Ausschlusszone unterbrochen wird, und
einem Ausgabemittel zum Ausgeben des Ergebnisses der dynamischen Routenverarbeitung.

2. Navigationsgerät nach Anspruch 1 mit einem Informationsspeichermittel zum Speichern von Information, welche die Reise, die empfangenen Verkehrsstörungsberichtsdaten und die mindestens eine Ausschlusszone definiert.

3. Navigationsgerät nach Anspruch 1 oder 2, wobei das Informationsspeichermittel so betreibbar ist, dass es Information speichert, die die mindestens eine Ausschlusszone definiert, die Daten umfasst, die eine Zeitdauer definieren, über die die Ausschlusszone aktiviert sein soll.

4. Navigationsgerät nach Anspruch 3, wobei das dynamische Routenverarbeitungsmittel auf die Daten, die die Zeitdauer definieren, reagiert, so dass eine dynamische Routenführung in Bezug auf mindestens einen vorbestimmten Typ von Verkehrsstörung innerhalb der mindestens einen spezifizierten Ausschlusszone unterbrochen wird, wenn die Ausschlusszone aktiv ist.

5. Navigationsgerät nach einem der vorhergehenden Ansprüche, wobei das dynamische Routenverarbeitungsmittel so betreibbar ist, dass es eine dynamische Routenführung in Bezug auf eine Verkehrsstörung innerhalb der mindestens einen spezifizierten Ausschlusszone beibehält, wobei die Verkehrsstörung eine Straßensperrung ist.

6. Navigationsgerät nach einem der vorhergehenden Ansprüche, wobei das Empfangsmittel so betreibbar ist, dass es rechtzeitig Verkehrsstörungsberichtsdaten empfängt, die einen Typ von Störung und einen Ort der Störung definieren.

7. Navigationsgerät nach einem der vorhergehenden Ansprüche, wobei das Ausgabemittel eine Anzeigeeinrichtung und/oder eine Sprachbefehlsausgabeeinrichtung aufweist.

8. Navigationsgerät nach einem der vorhergehenden Ansprüche, wobei das Eingabemittel eine berührungsempfindliche Anzeigeeinrichtung und/oder einen manuellen Auswähler und/oder eine Sprachaufnahme und Erkennungseinrichtung aufweist.

9. Navigationsgerät nach einem der vorhergehenden Ansprüche mit einem Positionsbestimmungsmittel, wobei das dynamische Routenführungsmittel auf eine Position des Navigationsgeräts, die durch das Positionsbestimmungsmittel bestimmt wird, reagiert.

10. Navigationsgerät nach Anspruch 9, wobei das Positionsbestimmungsmittel so betreibbar ist, dass es eine Position basierend auf Sattelitensignalinformation bestimmt.

11. Navigationsgerät nach einem der vorhergehenden Ansprüche, wobei das Navigationsgerät ein Autonavigationsgerät ist.

12. Fahrzeug mit dem Navigationsgerät nach einem der vorhergehenden Ansprüche.

13. Navigationsgerät nach einem der Ansprüche 1 bis 10, wobei das Navigationsgerät eine mobile Einrichtung aufweist.

14. Navigationsgerät nach einem der Ansprüche 1 bis 6, wobei das Navigationsgerät einen Computerserver aufweist.

15. Verfahren zum Navigieren, wobei ein Navigationsgerät verwendet wird, wobei das Verfahren das Navigationsgerät umfasst:
Speichern geografischer Kartendaten, die geografische Orte definieren,
Empfangen eines Eingangs, der eine Reise von einem geografischen Startpunkt zu einem geografischen Endpunkt und mindestens eine Ausschlusszone definiert, in der die dynamische Routenführung für die Reise nicht erforderlich ist,
Empfangen von Verkehrsstörungsberichtsdaten, die einen Typ von Störung und einen Ort der Störung definieren,
dynamisches Verarbeiten einer Route als Reaktion auf die Verkehrsstörungsberichtsdaten und mindestens einen spezifizierten Ausschluss und selektives Unterbrechen einer dynamischen Routenführung in Abhängigkeit von einem Typ von Verkehrsstörung innerhalb der mindestens einen spezifizierten Ausschlusszone und
Ausgeben des Ergebnisses der dynamischen Routenverarbeitung.

16. Verfahren nach Anspruch 15, wobei das Navigationsgerät Informationen speichert, die die Reise, die empfangenen Verkehrsstörungsberichtsdaten und die mindestens eine Ausschlusszone definieren.

17. Verfahren nach Anspruch 15 oder 16, wobei das Navigationsgerät Information speichert, die die mindestens eine Ausschlusszone definiert, die Daten umfasst, die eine Zeitdauer definieren, während der die Ausschlusszone aktiv sein soll.

18. Verfahren nach Anspruch 17, wobei das Navigationsgerät ein Reagieren auf die Daten umfasst, die die Zeitdauer definieren, für die eine dynamische Routenführung in Bezug auf mindestens einen vorbestimmten Typ von Verkehrsstörung innerhalb der mindestens einen spezifizierten Ausschlusszone unterbrochen wird, wenn die Ausschlusszone aktiv ist.

19. Verfahren nach einem der Ansprüche 15 bis 18, wobei das Navigationsgerät ein Beibehalten einer dynamischen Routenführung in Bezug auf eine Verkehrsstörung innerhalb der mindestens einen spezifizierten Ausschlusszone aufweist, wobei die Verkehrsstörung eine Straßensperrung ist.

20. Verfahren nach einem der Ansprüche 15 bis 19, wobei das Navigationsgerät ein Empfangen von Echtzeitverkehrsstörungsberichtsdaten, die einen Typ von Störung und einen Ort der Störung definieren, umfasst.

21. Verfahren nach einem der Ansprüche 15 bis 20, wobei das Navigationsgerät ein Bestimmen einer Position des Navigationsgeräts umfasst.

22. Verfahren nach Anspruch 21, wobei das Navigationsgerät ein Bestimmen einer Position des Navigationsgeräts basierend auf Sattelitensignalinformation umfasst.

23. Verfahren nach einem der Ansprüche 15 bis 22 zum Navigieren eines Fahrzeugs.

24. Computerprogrammprodukt mit Programmbefehlen zum Bewirken eines programmierbaren Navigationsgeräts, um das Verfahren nach einem der Ansprüche 15 bis 23 auszuführen.

25. Computerprogrammprodukt nach Anspruch 24 mit einem maschinenlesbaren Medium, wobei das maschinenlesbare Medium, wobei das maschinenlesbare Medium die Programmbefehle trägt.

## Revendications

1. Appareil de navigation, comprenant :
des moyens de stockage de données cartographiques géographiques destinés à stocker des données cartographiques géographiques qui définissent des localisations géographiques ;
des moyens destinés à recevoir une spécification d'un itinéraire d'un point de départ géographique à un point d'arrivée géographique et au moins une zone d'exclusion à l'intérieur de laquelle le guidage routier dynamique pour l'itinéraire n'est pas nécessaire ;
des moyens de réception destinés à recevoir des données de rapport d'incident de circulation définissant un type d'incident et une localisation de l'incident ;
des moyens de traitement routier dynamique destinés à réaliser un traitement routier dynamique, les moyens de traitement routier dynamique répondant à des données reçues de rapport d'incident de circulation et à l'au moins une zone d'exclusion spécifiée sélectivement pour suspendre le guidage routier dynamique selon un type d'incident de circulation à l'intérieur de l'au moins une zone d'exclusion spécifiée ; et
des moyens de sortie destinés à reproduire le résultat du traitement routier dynamique.

2. Appareil de navigation selon la revendication 1, comprenant des moyens de stockage d'informations destinés à stocker des informations définissant l'itinéraire, les données reçues de rapport d'incident de circulation et l'au moins une zone d'exclusion.

3. Appareil de navigation selon la revendication 1 ou la revendication 2, dans lequel les moyens de stockage d'informations fonctionnent pour stocker des informations définissant l'au moins une zone d'exclusion qui comprennent des données définissant une période de temps lorsque ladite zone d'exclusion doit être active.

4. Appareil de navigation selon la revendication 3, dans lequel les moyens de traitement routier dynamique répondent aux données définissant la période de temps pour suspendre le guidage routier dynamique par rapport à au moins un type prédéterminé d'incident de circulation à l'intérieur de l'au moins une zone d'exclusion spécifiée lorsque la zone d'exclusion est active.

5. Appareil de navigation selon une quelconque revendication précédente, dans lequel les moyens de traitement routier dynamique fonctionnent pour maintenir le guidage routier dynamique par rapport à un dit incident de circulation à l'intérieur de l'au moins une zone d'exclusion spécifiée où ledit incident de circulation est une fermeture de route.

6. Appareil de navigation selon une quelconque revendication précédente, dans lequel les moyens de réception fonctionnent pour recevoir des données de rapport d'incident de circulation en temps réel définissant un type d'incident et une localisation de l'incident.

7. Appareil de navigation selon une quelconque revendication précédente, dans lequel les moyens de sortie comprennent au moins un parmi un dispositif d'affichage et un appareil de sortie d'instructions vocales.

8. Appareil de navigation selon une quelconque revendication précédente, dans lequel les moyens d'entrée comprennent un parmi un dispositif d'affichage tactile, un sélecteur manuel ou un appareil de capture et de reconnaissance vocale.

9. Appareil de navigation selon une quelconque revendication précédente, comprenant des moyens de détermination de position, les moyens de guidage routier dynamique répondant à une position de l'appareil de navigation déterminée par les moyens de détermination de position.

10. Appareil de navigation selon la revendication 9, dans lequel les moyens de détermination de position fonctionnent pour déterminer une position sur la base d'informations par signal satellite.

11. Appareil de navigation selon une quelconque revendication précédente, dans lequel l'appareil de navigation est un appareil de navigation de véhicule.

12. Véhicule comprenant l'appareil de navigation selon une quelconque revendication précédente.

13. Appareil de navigation selon une quelconque des revendications 1 à 10, dans lequel l'appareil de navigation comprend un dispositif mobile.

14. Appareil de navigation selon une quelconque des revendications 1 à 6, dans lequel l'appareil de navigation comprend un serveur informatique.

15. Procédé de navigation utilisant un appareil de navigation, le procédé comprenant les étapes, réalisées par l'appareil de navigation, consistant à :
stocker des données cartographiques géographiques qui définissent des localisations géographiques ;
recevoir une entrée spécifiant un itinéraire d'un point de départ géographique à un point d'arrivée géographique et au moins une zone d'exclusion à l'intérieur de laquelle un guidage routier dynamique pour l'itinéraire n'est pas nécessaire ;
recevoir des données de rapport d'incident de circulation définissant un type d'incident et une localisation de l'incident ;
traiter dynamiquement un itinéraire en réponse aux données de rapport d'incident de circulation et à l'au moins une exclusion spécifiée et suspendre sélectivement le guidage routier dynamique suivant un type d'incident de circulation à l'intérieur de l'au moins une zone d'exclusion spécifiée ; et
reproduire le résultat du traitement routier dynamique.

16. Procédé selon la revendication 15, comprenant l'étape, réalisée par l'appareil de navigation, consistant à stocker des informations définissant l'itinéraire, les données reçues de rapport d'incident de circulation et l'au moins une zone d'exclusion.

17. Procédé selon la revendication 15 ou la revendication 16, comprenant l'étape, réalisée par l'appareil de navigation, consistant à stocker des informations définissant l'au moins une zone d'exclusion qui comprennent des données définissant une période de temps lorsque ladite zone d'exclusion doit être active.

18. Procédé selon la revendication 17, comprenant l'étape, réalisée par l'appareil de navigation, consistant à répondre aux données définissant la période pour suspendre le guidage routier dynamique par rapport à au moins un type prédéterminé d'incident de circulation à l'intérieur de l'au moins une zone d'exclusion spécifiée lorsque la zone d'exclusion est active.

19. Procédé selon une quelconque des revendications 15 à 18, comprenant l'étape, réalisée par l'appareil de navigation, consistant à maintenir le guidage routier dynamique par rapport à un dit incident de circulation à l'intérieur de l'au moins une zone d'exclusion spécifiée où ledit incident de circulation est une fermeture de route.

20. Procédé selon une quelconque des revendications 15 à 19, comprenant l'étape, réalisée par l'appareil de navigation, consistant à recevoir des données de rapport d'incident de circulation en temps réel définissant un type d'incident et une localisation de l'incident.

21. Procédé selon une quelconque des revendications 15 à 20, comprenant l'étape, réalisée par le dispositif de navigation, consistant à déterminer une position de l'appareil de navigation.

22. Procédé selon une quelconque des revendications 21, comprenant l'étape, réalisée par le dispositif de navigation, consistant à déterminer une position de l'appareil de navigation sur la base d'informations par signal satellite.

23. Procédé selon une quelconque des revendications 15 à 22, pour réaliser la navigation d'un véhicule.

24. Produit-programme informatique comprenant des instructions de programme pour faire en sorte qu'un appareil de navigation programmable réalise le procédé selon une quelconque des revendications 15 à 23.

25. Produit-programme informatique selon la revendication 24, comprenant un support assimilable par machine, le support assimilable par machine réalisant les instructions de programme.
